Europäisches Patentamt

(19) European Patent Office

Office européen des brevets

(11) Numéro de publication : **0 451 044 A1**

## (12) DEMANDE DE BREVET EUROPEEN

(21) Numéro de dépôt : **91400886.7**

(51) Int. Cl.$^5$ : **G06K 19/06**

(22) Date de dépôt : **02.04.91**

(30) Priorité : **05.04.90 FR 9004358**

(43) Date de publication de la demande :
**09.10.91 Bulletin 91/41**

(84) Etats contractants désignés :
**BE DE ES GB IT**

(71) Demandeur : **RENAULT AUTOMATION**
**8/10 avenue Emile Zola**
**F-92109 Boulogne-Billancourt (FR)**

(72) Inventeur : **Thurier, Yvan**
**6, rue des Charmes**
**F-94320 Thiais (FR)**

(74) Mandataire : **Ernst-Schonberg, Michel**
**REGIE NATIONALE DES USINES RENAULT**
**SA, Sce 0267, 860, quai de Stalingrad**
**F-92109 Boulogne Billancourt Cédex (FR)**

(54) **Procédé d'identification à l'aide d'un code et dispositif de lecture de ce code.**

(57) La présente invention concerne un procédé d'identification d'objets à l'aide d'un code, consistant à réaliser sur chaque objet une rangée (A) d'empreintes (1A-4A) chaque empreinte pouvant présenter deux états différents qui représentent les deux états d'un bit du code, caractérisé en ce qu'il consiste à réaliser une autre rangée (B) d'empreintes (1B-4B), deux empreintes, l'une d'une rangée (A) et l'autre de l'autre rangée (B), présentant deux états différents qui concernent un même bit du code.

Elle concerne également un dispositif de lecture mettant en oeuvre le procédé.

## FIG.1

EP 0 451 044 A1

La présente invention concerne un procédé d'identification d'objets et plus particulièrement de composants mécaniques qui doivent être triés lors de leur arrivée dans une machine automatique.

Elle concerne également un dispositif de lecture installé sur la machine automatique.

On connaît des procédés d'identification d'objets, et notamment de composants mécaniques utilisant des codes réalisés sous forme de marquages physiques du composant.

Ces marquages sont matérialisés par une rangée d'empreintes comportant par exemple deux formes différentes ou deux profondeurs différentes, ou encore par l'absence ou la présence d'empreintes. Ces marquages représentent deux états différents.

Ainsi, par exemple, pour un code à 4 bits, dont chaque bit est défini par deux états différents (par exemple, absence ou présence d'une empreinte), le marquage peut être matérialisé par seize combinaisons différentes allant de l'absence totale d'empreinte jusqu'à la présence de quatre empreintes. Le dispositif de lecture est alors constitué de quatre touches alignées qui viennent en appui sur le composant, au niveau de la série d'empreintes. A l'endroit où il n'y a pas d'empreintes, la tige se soulève et elle occupe alors une position levée appelée par exemple "état 0 du bit", et à l'endroit où il y a une empreinte, la tige rentre dans cette empreinte, sans se soulever, et elle occupe alors une position sortie appelée "état 1 du bit".

Ces procédés d'identification par marquage présentent un inconvénient dans la mesure où il n'y a qu'une seule empreinte qui définisse l'état 0 ou 1 d'un bit. Si l'empreinte est obturée par un corps étranger, par exemple un copeau, la touche n'occupera pas la position prévue par l'empreinte et la lecture sera alors erronée.

Afin d'obtenir une haute fiabilité de lecture, la présente invention prévoit une deuxième rangée d'empreintes et une deuxième série de touches sur le dispositif de lecture. La redondance de la lecture est ainsi assurée car chaque bit est défini par les deux états d'une empreinte mais aussi par les deux états d'une autre empreinte complémentaire.

La présente invention a pour objet un procédé d'identification d'objets à l'aide d'un code, consistant à réaliser sur chaque objet une rangée d'empreintes, chaque empreinte pouvant présenter deux états différents qui représentent les deux états d'un bit du code.

Selon l'invention, le procédé consiste à réaliser une autre rangée d'empreintes, deux empreintes, l'une d'une rangée et l'autre de l'antre rangée, présentant deux états différents qui concernent un même bit du code.

Selon une première variante du procédé, qui permet de regrouper les empreintes et ainsi de simplifier le dispositif de lecture, on place les deux rangées parallèles entre elles, les deux empreintes présentant deux états différents d'un même bit du code, constituant alors une colonne.

Selon une deuxième variante au procédé, qui permet néanmoins la mise en place des deux rangées si la place disponible est insuffisante pour adopter la première variante, on place les deux rangées d'empreintes en ligne ou à deux endroits quelconques, les deux empreintes présentant deux états différents pour un même bit du code étant alors éloignées l'une de l'autre.

La présente invention a également pour objet un dispositif de lecture, caractérisé en ce qu'il comporte pour chaque empreinte une touche coulissant entre une position "rentrée" correspondant à l'absence d'une empreinte, et une position "sortie" correspondant à la présence d'une empreinte, un poussoir relié à des moyens élastiques pour solliciter en permanence la touche, un capteur repérant la position "rentrée" ou "sortie" d'une touche par l'intermédiaire d'un repère installé sur un poussoir.

Le capteur est de préférence un capteur à effet hall, le repère étant alors une partie amagnétique qui, en fonction de la position du poussoir, change le sens d'un flux magnétique traversant le capteur.

Selon un premier mode de réalisation du dispositif, permettant la mise en oeuvre de la première variante du procédé, ce dispositif comporte un sous-ensemble par colonne, chaque sous-ensemble étant muni de deux touches, de deux poussoirs, de deux capteurs, et d'au moins deux aimants ou deux parties d'aimant.

Ce dispositif peut comporter deux aimants ou deux parties d'aimant placés entre les poussoirs, mais de préférence ce dispositif comporte quatre aimants ou quatre parties d'aimant placés à l'extérieur des poussoirs, ce qui permet de rapprocher les deux poussoirs l'un de l'autre afin que les huit empreintes occupent une place minimale sur la pièce.

Selon un deuxième mode de réalisation du dispositif, permettant la mise en oeuvre de la deuxième variante du procédé, ce dispositif comporte un sous-ensemble par rangée, chaque sous-ensemble étant muni pour chaque empreinte d'une touche, d'un poussoir, d'un capteur et d'au moins deux aimants ou de deux parties d'aimant.

Il est décrit ci-après, à titre d'exemple et en référence aux dessins annexés, un procédé et un dispositif de lecture selon l'invention.

La figure 1 montre une vue de dessus d'une pièce comportant un code à quatre bits dont les deux rangées d'empreintes sont parallèles;

les figures 2 à 4 montrent un dispositif de lecture permettant de lire le code de la figure 1;

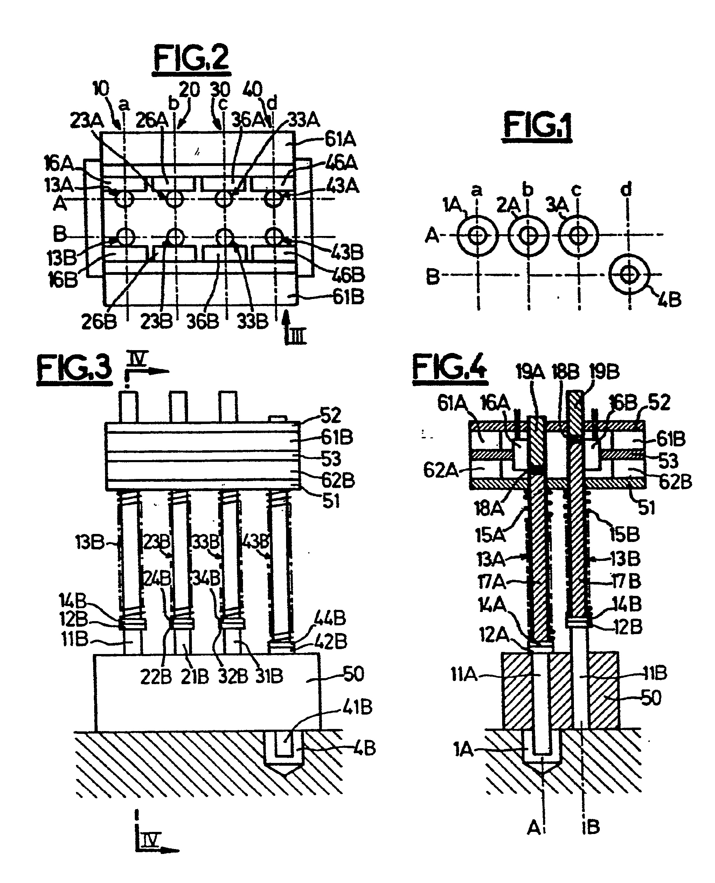

la figure 2 montre le dispositif de lecture en vue de dessus, la plaque supérieure du bâti étant enlevée;

la figure 3 est une vue de face du dispositif de lecture selon III de la figure 2;

la figure 4 est une vue en coupe du dispositif selon IV de la figure 3, montrant un sous-ensemble de lecture d'un bit.

Sur la figure 1, le code à quatre bits comporte deux rangées A, B et quatre colonnes a, b, c, d. La rangée A serait suffisante, comme c'est le cas dans l'art antérieur, pour déterminer l'état d'un bit représenté par la présence ou l'absence d'une empreinte. Selon l'invention, le code comporte une deuxième rangée B complémentaire de la rangée A, dans la mesure où il n'y a pas d'empreinte dans cette rangée B s'il y a une empreinte dans la rangée A, et inversement. Le code est redondant, car chaque état d'un bit est déterminé deux fois, une première fois par l'empreinte de la rangée A et une deuxième fois par l'absence d'empreinte de la rangée B, ou inversement. C'est en fait la position du trou (dans la rangée A ou dans la rangée B) qui détermine la valeur du bit.

Dans l'exemple de la figure 1, le code comporte, dans la rangée A, trois empreintes 1A, 2A, 3A, au niveau des colonnes, respectivement a, b, c, et pas d'empreinte au niveau de la colonne d. Le code comporte dans la rangée B, une empreinte 4B au niveau de la colonne d, mais pas d'empreinte au niveau des colonnes a, b, c.

Ce codage à quatre bits permet une reconnaissance de seize objets différents, et bien entendu le code pourrait être réduit à trois bits, voire deux ou être étendu à cinq bits et plus en fonction des besoins.

On peut placer le bit de poids le plus fort dans la colonne a et le bit de poids le plus faible dans la colonne d.

Une empreinte peut être réalisée, par exemple par perçage.

Dans la figure 2, le dispositif permet la lecture du code de la figure 1. Ce dispositif est constitué de quatre sous-ensembles 10, 20, 30, 40, chaque sous-ensemble correspondant à une colonne a, b, c, d. Chaque sous-ensemble comporte respectivement deux poussoirs 13A, 13B; 23A, 23B; 33A, 33B; 43A, 43B, les deux poussoirs d'un même sous-ensemble étant l'un sur la rangée A et l'autre sur la rangée B.

La figure 3 montre que ce dispositif comporte quatre pièces 50, 51, 52, 53, reliées ensemble pour constituer un châssis.

La pièce 50 sert de guide à huit touches, seules les touches 11B, 21B, 31B et 41B étant visibles dans cette figure 3. Les pièces 51, 52 servent de guide pour les poussoirs. Chaque poussoir comporte une embase (seules les embases 14B, 24B, 34B et 44B étant visibles), qui prennent appui sur une butée d'une touche, respectivement 12B, 22B, 32B, 42B. Chaque poussoir est poussé en permanence contre une touche par l'intermédiaire d'un ressort (seuls les ressorts 15B, 25B, 35B et 45B étant visibles).

La figure 4, qui représente le sous-ensemble 10 vu de côté et en coupe, montre que la position "sortie" d'une touche (dans ce cas la touche 11A) est déterminée par la présence d'une empreinte (dans ce cas 1A, rangée A, colonne a), et la position "rentrée" est déterminée par l'absence d'empreinte (rangée B, colonne a). Le diamètre de chaque touche est plus petit que le diamètre d'une empreinte, afin de faciliter la mise en place du dispositif, sans précision de positionnement inutile.

Chaque sous-ensemble comporte aussi deux capteurs (les huit capteurs 16A, 16B; 26A, 26B; 36A, 36B; 46A, 46B étant tous visibles en figure 2), chaque capteur étant associé à un poussoir adjacent. Chaque poussoir est constitué par exemple d'un tube renfermant de bas en haut et successivement, une partie magnétique (17A, ... , 47B), une partie amagnétique (19A, ... , 48B) et enfin une autre partie magnétique (19A, ... , 49B).

Le dispositif comporte, dans cet exemple préféré de réalisation, quatre aimants 61A, 62A; 61B, 62B, les deux aimants supérieurs 61A, 61B étant également visibles en figure 2, car dans cette figure, la pièce 52 du bâti a été retirée. les deux aimants 61A, 62A sont réparés par la pièce 53 et associés à quatre capteurs 16A, 26A, 36A, 46A, tandis que les deux aimants 61B, 62B sont séparés par la pièce 53 et associés aux quatre capteurs 16B, 26B, 36B, 46B. Bien entendu, chaque groupe de deux aimants 61A à 62A ou 61B à 62B pourrait être remplacé par huit petits aimants, deux par capteur.

Un tel dispositif fonctionne de la manière suivante.

En fonction de la position de la touche, donc du poussoir et donc de la partie amagnétique du poussoir, le flux magnétique produit par un aimant traverse le capteur, tandis que l'autre flux produit par l'autre aimant ne traverse pas le capteur. Dans le cas de la figure 4, la touche 11A est en position "sortie" dans l'empreinte 1A, et la partie amagnétique 18A du poussoir 13A est dans sa position basse. Le flux magnétique produit par l'aimant 61A est bouclé sur le capteur, tandis que le flux magnétique produit par l'aimant 62A est interrompu. Le capteur à effet Hall 16A indiquera alors à un circuit électronique (non représenté) que la touche est en position sortie" dans une empreinte, et que la valeur du bit est alors 1. Bien entendu, l'inverse se produit dans le capteur 16B et ce capteur indiquera au même circuit électronique et de manière redondante, que la touche 11B est en position "rentrée". Cette double lecture confirmera la valeur du bit.

Un bit est valide si les deux capteurs qui le concernent sont dans un état complémentaire, réalisant ainsi une fonction "OU EXCLUSIF" des deux informations.

Il est alors facile de générer un signal de validation du code complet, en réalisant une fonction "ET" des quatre fonctions "OU EXCLUSIF" relatifs aux quatre bits.

Pour s'assurer que chaque touche revient bien en position repos (position "sortie") en l'absence de pièce, il suffit de créer un signal d'état repos, en réalisant une fonction "ET" de l'information fournie par chaque capteur au repos.

Ainsi, le dispositif de lecture délivre six signaux : les 4 valeurs des bits du code, le signal de validation du code complet, et le signal d'état repos.

**Revendications**

1. Procédé d'identification d'objets à l'aide d'un code, consistant à réaliser sur chaque objet une rangée (A) d'empreintes, chaque empreinte pouvant présenter ,deux états différents qui représentent les deux états d'un bit du code, caractérisé en ce qu'il consiste à réaliser une autre rangée (B) d'empreintes, deux empreintes, l'une d'une rangée (A) et l'autre de l'autre rangée (B), présentant deux états différents qui concernent un même bit au code.

2. Procédé d'identification selon la revendication 1, caractérisé en ce que l'on place les deux rangées parallèles entre elles, les deux empreintes présentant deux états différents pour un même bit du code, constituant alors une colonne (a, b, c, d).

3. Procédé selon la revendication 1, caractérisé en ce que l'on place les deux rangées en ligne ou à deux endroits quelconques d'un même objet, les deux empreintes présentant deux états différents pour un même bit du code, étant alors éloignées l'une de l'autre.

4. Dispositif de lecture mettant en oeuvre un procédé selon l'une des revendications 1 à 3, caractérisé en ce qu'il comporte, pour chaque empreinte, une touche (11A, 11B; 21A, 21B; 31A, 31B; 41A, 41B) coulissant entre une position "rentrée" correspondant à l'absence d'empreinte et une position "sortie" correspondant à la présence d'une empreinte, un poussoir (13A, 13B; 23A, 23B; 33A, 33B; 43A, 43B) relié à des moyens élastiques pour solliciter en permanence la touche, un capteur (16A, 16B; 26A, 26B; 36A, 36B; 46A, 46B) repérant la position "rentrée" ou "sortie" d'une touche par l'intermédiaire d'un repère installé sur un poussoir.

5. Dispositif de lecture selon la revendication 4, caractérisé en ce que le capteur est un capteur à effet Hall, le repère étant une partie amagnétique (18A, 18B; 28A, 28B; 38A, 38B; 48A, 48B) qui, en fonction de la position du poussoir, change le sens d' un flux magnétique traversant le capteur.

6. Dispositif de lecture selon la revendication 5, mettant en oeuvre un procédé selon la revendication 2, caractérisé en ce qu'il comporte un sous-ensemble (10, 20, 30, 40) par colonne (a, b, c, d), chaque sous-ensemble étant muni de deux touches, de deux poussoirs, de deux capteurs et d'au moins deux aimants ou deux parties d'aimant.

7. Dispositif de lecture selon la revendication 5, mettant en oeuvre un procédé selon la revendication 3, caractérisé en ce qu'il comporte un sous-ensemble par rangée, chaque sous-ensemble étant muni, pour chaque empreinte, d'une touche, d'un poussoir, d"un capteur et d'au moins deux aimants ou deux parties d'aimant.

# FIG.2

# FIG.1

# FIG.3

# FIG.4

Office européen
des brevets

**RAPPORT DE RECHERCHE EUROPEENNE**

Numero de la demande

EP    91 40 0886

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-250340 (ALUMINIUM PECHINEY) <br> * page 2, ligne 35 - page 3, ligne 10; revendications 1-2, 7, 12; figures 6-7 * | 1-4 | G06K19/06 |
| A | * page 5, lignes 1 - 25 * <br> * page 8, lignes 1 - 35 * | 5-7 | |
| Y | EP-A-122165 (SOCIETE D,ELECTRONIQUE DE LA REGION PAYS DE LOIRE SEREL) <br> * abrégé; revendication 1; figures 2-4 * <br> * page 2, ligne 30 - page 3, ligne 10 * | 1-4 | |

DOMAINES TECHNIQUES RECHERCHES (Int. Cl.5)

G06K

Le présent rapport a été établi pour toutes les revendications

| Lieu de la recherche | Date d'achèvement de la recherche | Examinateur |
|---|---|---|
| LA HAYE | 15 JUILLET 1991 | BEAUCE G.Y.G. |